# EUROPÄISCHE PATENTSCHRIFT

(11) **EP 1 612 083 B1**
(45) Veröffentlichungstag und Bekanntmachung des Hinweises auf die Patenterteilung: **06.01.2010**
(21) Anmeldenummer: 05104472.5
(22) Anmeldetag: 25.05.2005
(51) Int. Cl.: B60K 31/00, G01S 13/93

(54) **Verfahren und Vorrichtung zur Kursprädiktion von bewegten Objekten**
Apparatus and method for course prediction of moving objects
Méthode et appareil pour la prédiction de course d'objets en mouvement

(30) Priorität: 30.06.2004 DE 102004031885
(43) Veröffentlichungstag der Anmeldung: 04.01.2006
(73) Patentinhaber: ROBERT BOSCH GMBH, 70442 Stuttgart (DE)
(72) Erfinder: Randler, Martin, 70569, Stuttgart (DE); Petschnigg, Peter, 70469, Stuttgart (DE); Jordan, Ruediger, 70435, Stuttgart (DE)

(56) Entgegenhaltungen:
- WO-A-03/006291
- WO-A-03/096068
- WO-A2-02/21156
- US-A- 5 633 642
- WINNER ET AL: "Adaptive Cruise Control System Aspects and Development Trends" SAE TRANSACTIONS, SOCIETY OF AUTOMOTIVE ENGINEERS, INC., WARRENDALE, PA, US, Bd. 105, Nr. 961010, 1996, Seiten 1412-1421, XP002124577 ISSN: 0096-736X

## Beschreibung

Die vorliegende Erfindung betrifft ein Verfahren und eine Vorrichtung zur Kursprädiktion von bewegten Objekten, insbesondere bezüglich eines mit einer Objekterkennungssensorik und mit einem adaptiven Abstands- und Geschwindigkeitsregler ausgestatteten Fahrzeug, bei dem die zukünftigen Bewegungen der Objekte vorausberechnet werden. Hierzu werden mittels eines Objektsensors lediglich die momentanen Positionen der Objekte der vorausbefindlichen Objekte relativ zum eigenen Fahrzeug bestimmt und dem adaptiven Abstands- und Geschwindigkeitsregler zugeführt, der mittels eines Dynamikmodells niederer Ordnung und unter der Annahme, dass alle erkannten Objekte im wesentlichen den gleichen Kurs haben in Abhängigkeit der zugeführten, momentanen Objektpositionen die zukünftigen Objektkurse prädiziert.

### Stand der Technik

Aus der Veröffentlichung "Adaptive Cruise Control System - Aspects and Development Trends" (SAE 961010), veröffentlicht auf der SAE International Congress & Exposition, Detroit, 26. - 29. Februar 1996, ist ein adaptiver Abstands- und Geschwindigkeitsregler bekannt, der mittels Mikrowellenstrahlung den Abstand und die Relativgeschwindigkeit vorherfahrender Fahrzeuge und Objekte misst und selbsttätig die Antriebseinrichtung bzw. die Verzögerungseinrichtungen des Fahrzeugs ansteuert. Wird kein vorherfahrendes Fahrzeug detektiert, so wirkt der adaptive Abstands- und Geschwindigkeitsregler als Geschwindigkeitskonstantregler und regelt die Fahrzeuggeschwindigkeit auf eine vom Fahrer vorgegebene Sollgeschwindigkeit ein. Wird demgegenüber ein vorherfahrendes Fahrzeug erkannt, so regelt der adaptive Abstands- und Geschwindigkeitsregler die Geschwindigkeit derart, dass eine Regelung im Sinne einer Abstandskonstantregelung zu dem vorherfahrenden Fahrzeug erfolgt.

Das Dokument WO 03/006291 ist als nächstliegenden Stand der Technik nach der Oberbegriff des Anspruchs 1 zu sehen und zeigt ein Verfahren zur Kursprädiktion von bewegten Objekten, insbesondere bezüglich eines mit einer Objekterkennungssensorik und einem adaptiven Abstands- und Geschwindigkeitsregler ausgestatteten Fahrzeug, bei dem die zukünftigen Bewegungen der Objekte vorausberechnet werden.

Aus der Veröffentlichung "Adaptive Fahrgeschwindigkeitsregelung ACC" (ISBN-3-7782-2034-9), veröffentlicht von der Robert Bosch GmbH im April 2002 ist ebenfalls ein adaptiver Fahrgeschwindigkeits- und Abstandsregler bekannt. Insbesondere im Kapitel Detektion und Objektauswahl auf den Seiten 32 bis 36 ist die Objektauswahl sowie die Kursprädiktion der vorauserkannten Objekte dieses Geschwindigkeits- und Abstandsreglers beschrieben. Durch das sogenannte Objekttracking, bei dem die relativen Positionen des vorherfahrenden Fahrzeugs in Absolutpositionen umgerechnet werden und deren zeitliche Veränderung, unter Berücksichtigung der Geschwindigkeit der Objekte sowie der Beschleunigungen der Objekte, wird die zukünftige Bewegungslinie der Objekte vorausberechnet um Fahrbahnlcrümmungen, Spurwechsel vorherfahrender Fahrzeuge zu erkennen und hieraus das direkt vorherfahrende Fahrzeug als Zielobjekt auswählen zu können.

Nachteilig bei diesem Stand der Technik ist es, dass zur Kursprädiktion der vorherfahrenden Fahrzeuge Dynamikmodelle höherer Ordnung verwendet werden, indem beispielsweise der Abstand, die Relativgeschwindigkeit sowie die Beschleunigung der Fahrzeuge zur Berechnung des zukünftigen Aufenthaltsortes herangezogen werden. Ein derartiges System hat den Nachteil, dass bereits geringe Störeinflüsse, beispielsweise in Form von Rauschen, zur Vorzeichenfehlern in den Ableitungen dieser Größen führen können, so dass die Dynamikmodelle höherer Ordnung, in diesem Beispiel zweiter Ordnung, da die Beschleunigung in einem quadratischen Term berücksichtigt wird, eine große Unsicherheit bezüglich der Genauigkeit der Voraussage aufweisen. Alternativ wäre es möglich, diese Signale einer starken Tiefpassfilterung zuzuführen, wodurch das Rauschen und die Störeinflüsse eliminiert würden, jedoch ist hiermit auch eine zeitliche Verzögerung der Messgrößen verbunden, die in sicherheitsrelevanten Situationen nicht akzeptierbar sind.

### Kern und Vorteile der Erfindung

Der Kern der vorliegenden Erfindung ist es, ein Verfahren und eine Vorrichtung anzugeben, mit denen eine Kursprädiktion von bewegten Objekten, insbesondere bezüglich eines mit einem adaptiven Abstands- und Geschwindigkeitsregler ausgestatteten Fahrzeug ermöglich werden soll, bei dem die zukünftigen Bewegungen der Objekte vorausberechnet werden, wobei einerseits die Auswirkung von Störeinflüssen und Rauschen möglichst minimiert werden sollen, jedoch andererseits eine zeitnahe Auswertung der Messwerte ermöglicht werden soll, wodurch beispielsweise eine Tiefpassfilterung der Messgrößen ausscheidet. Erfindungsgemäß wird dieses durch die Merkmale der unabhängigen Ansprüche gelöst. Vorteilhafte Weiterbildungen und Ausgestaltungen ergeben sich aus den Unteransprüchen.

Vorteilhafterweise misst die Objektsensorik den Abstand der erkannten, bewegten Objekte mittels Mikrowellenstrahlung, Laserstrahlung, Ultraschall oder einer Kombination hieraus. Optional kann es auch vorgesehen sein, den Azimutwinkel des Objektes bezüglich der Fahrzeuglängsachse zu erfassen, um eine exakte Positionsbestimmung des Objektes in Bezug auf das eigene Fahrzeug durchführen zu können. Die Messung erfolgt hierbei vorteilhafterweise mittels Mikrowellenstrahlung, die von einem Radarsensor ausgesandt und empfangen wird oder mittels eines Lasersensors, wobei diese Sensorarten eine exakte Bestimmung des Abstands und der Relativgeschwindigkeit der erkannten Objekte ermöglichen. Weiterhin kann es auch vorgesehen sein, die Objekte mittels Ultraschall zu orten oder einen einzelnen oder mehrere Sensoren vorzusehen, die verschiedene der aufgeführten Messverfahren verwenden.

Weiterhin ist es vorteilhaft, dass das Dynamikmodell niederer Ordnung eine zukünftige Objektposition aus der momentanen Objektposition und der Querversatzgeschwindigkeit des Objekts berechnet. Insbesondere kann das Dynamikmodell niederer Ordnung nach der Gleichung yₖ = yₖ₋₁ + yₖ₋₁(v_{dyi}) aufgebaut sein, wobei y(k-1) die momentane Objektposition, y(k) eine zukünftige Objektposition unter Berücksichtigung der Kollektivgeschwindigkeit und Yₖ₋₁(V_{dyi}) eine zukünftige Objektpositionskorrektur infolge der Querversatzgeschwindigkeit des Objekts repräsentiert. Hierbei wird die Kollektivbewegung der erkannten Objekte zur Kursprädiktion herangezogen sowie Bewegungscharakteristiken derartiger Objektensembles berücksichtigt, da beispielsweise im Fall von Autobahnen oder mehrspurig ausgebauten Kraftfahrstraßen alle Objekte in etwa die gleiche Bewegungsrichtung sowie in etwa die gleiche Bewegungsgeschwindigkeit aufweisen. Durch die Beschreibung der Gesamtheit der erkannten Objekte mittels einer Kollektivbewegung erhält man Dynamikgrößen für die bewegten Objekte, die relativ geringe Relativgeschwindigkeiten, sowohl in Längs- als auch in Querrichtung aufweisen. Durch die betragsmäßig geringen Relativgeschwindigkeiten ist es möglich, auf die Tiefpassfilterung der Messgrößen zur Reduzierung der Störeinflüsse und des Rauschens in den Messgrößen zu verzichten, da aufgrund der betragsmäßig kleinen Werte auch nur kleine Einflüsse von Störgrößen oder von Rauschen vorhanden ist. Hierdurch ist es auch möglich, ein Dynamikmodell zu verwenden, das eine relativ niedrige Ordnung aufweist, also nicht wie im Stand der Technik beschrieben ein System beispielsweise zweiter Ordnung zu verwenden, bei dem die Position, die Geschwindigkeit sowie die Beschleunigung zur Kursprädiktion einbezogen werden.

Der wahrscheinliche Kurs kann auch aus der Gierrate des eigenen Fahrzeugs geschätzt werden. Dies bringt Vorteile, wenn nur wenige Zielobjekte im Sichtbereich des Sensors erkannt wurden. Eine weitere Möglichkeit zur Bestimmung des wahrscheinlichsten Kurses ist die Auswertung von Standzielen am Fahrbahnrand, die beispielsweise Schilder oder Leitplanken sein können. Entlang dieser Standziele kann der Kursverlauf der Fahrbahn geschätzt werden.

Weiterhin ist es vorteilhaft, dass für alle erkannten, bewegten Objekte ein gemeinsamer Bewegungsvektor, der die Kollektivgeschwindigkeit beschreibt, ermittelt wird.

Vorteilhafterweise wird zur Kursprädiktion zusätzlich ein Gierratensignal des eigenen Fahrzeugs herangezogen. Heutzutage weisen die meisten Fahrzeuge Gierratensensoren zur Steuerung einer Fahrdynamikregelung auf, deren Gierratensignal zur Bestimmung von Fahrbahnlcrümmungen der berechneten Kursverläufe ausgewertet werden kann.

Vorteilhafterweise werden zur Kursprädiktion zusätzlich stehende Ziele am Fahrbahnrand detektiert und ausgewertet, indem der vorausberechnete Kurs entlang der stehenden Ziele prädiziert wird.

Weiterhin ist es vorteilhaft, dass für jedes Objekt eine Querversatzgeschwindigkeit ermittelt wird, die als konstant angenommen wird. Hierdurch ist es möglich, die Bewegung eines einzelnen Objektes in Bezug auf die Gesamtbewegung aller erkannten Objekte zu beschreiben.

Weiterhin ist es vorteilhaft, dass die Querversatzgeschwindigkeitswerte tiefpassgefiltert und/oder kalinangefiltert werden. Da die Geschwindigkeitsänderungen der Querversatzgeschwindigkeit vergleichsweise niedrige Beträge annehmen, kann man diese zur Vereinfachung zumindest für den nächsten Berechnungszyklus, als konstant annehmen. Durch die Tiefpassfilterung kommt es nur zu einem geringen Fehler, der auf die Exaktheit der Kursvoraussage des Objektes eine vernachlässigbare Auswirkung hat.

Besonders vorteilhaft ist es, dass aus der Querversatzgeschwindigkeit eines bewegten, erkannten objektes ein Spuirwechsel ableitbar ist, wenn die Querversatzgeschwindigkeit bezüglich der Kollektivbewegung abweicht, wobei ein Spurwechsel beispielsweise aus der Abweichung erkennbar ist, wenn diese mindestens über einen vorbestimmten Zeitraum vorhanden ist oder wenn die Abweichung eine vorbestimmten Schwellenwert überschreitet.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einen Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Zeichnungen.

### Zeichnungen

Nachfolgend werden Ausführungsbeispiele der Erfindung anhand von Zeichnungen erläutert. Es zeigen
- Figur 1: ein Blockschaltbild einer Ausführungsform der erfindungsgemäßen Vorrichtung,
- Figur 2a: eine beispielhafte Verkehrssituation zur Verwendung des erfindungsgemäßen Vorrichtung und Verfahrens,
- Figur 2b: eine weitere Verkehrssituation zur Verwendung der erfindungsgemäßen Vorrichtung des erfindungsgemäßen Verfahrens und
- Figur 3: ein Ablaufdiagram einer Ausführungsform des erfindungsgemäßen Verfahrens.

### Beschreibung von Ausführungsbeispielen

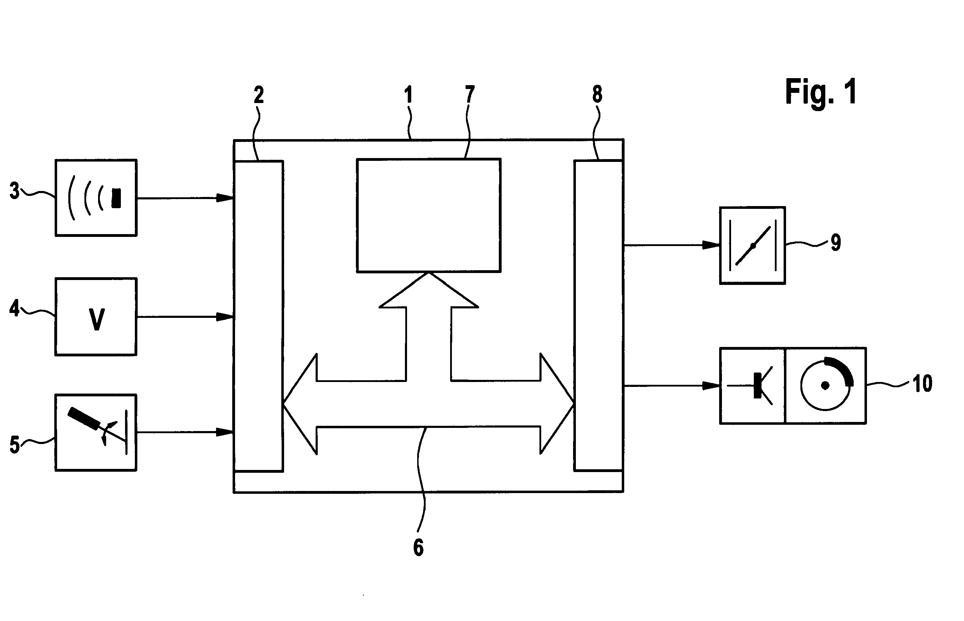

In Figur 1 ist ein adaptiver Abstands- und Geschwindigkeitsregler 1 dargestellt, dem mittels der Eingangsschaltung 2 Eingangssignale zuführbar sind. Als Eingangssignale werden dem adaptiven Abstands- und Geschwindigkeitsregler 1 ein Signal von einer Objektsensorik 3 zugeführt, die beispielsweise als Mikrowellensende- und - empfangseinrichtung, als Lasersende- und -empfangseinrichtung, als Ultraschallsende- und -empfangseinrichtung oder als Videoempfänger oder als eine Kombination aus diesen Sensorarten ausgeführt sein kann. Diese Objektsensorik 3 misst hierbei den Abstand der erkannten Objekte, die sich im Bereich vor dem Fahrzeug befinden und kann optional auch den Azimutwinkel des erkannten Objekts bezüglich der verlängerten Fahrzeuglängsachse messen. Weiterhin wird der Eingangsschaltung 2 des adaptiven Abstands- und Geschwindigkeitsreglers 1 ein Geschwindigkeitssignal v eines Geschwindigkeitssensors 4 zugeführt, das die Geschwindigkeit des eigenen Fahrzeugs repräsentiert. Weiterhin sind der Eingangsschaltung 2 Bedien- und Einstellsignale einer Bedieneinrichtung 5 zuführbar, mittels der der adaptive Abstands- und Geschwindigkeitsregler 1 ein- und ausschaltbar ist sowie in seiner Funktionalität veränderbar und bezüglich der Regelparameter fahrerspezifisch einstellbar ist. Weiterhin kann es zusätzlich vorgesehen sein, der Eingangsschaltung 2 ein Signal zuzuführen, mit dem die Kurvenkrümmung einer durchfahrenen Kurve ermittelbar ist. Dieses kann beispielsweise ein Lenkwinkelsignal eines Lenkwinkelsensors, der an der Lenkradwelle angebracht ist, sein oder aber ein Gierratensignal eines Gierratensensors sein, der die Gierrate des Fahrzeugs infolge der Kurvendurchfahrt misst. Die der Eingangsschaltung 2 des adaptiven Abstands- und Geschwindigkeitsreglers 1 zugeführten Signale werden mittels einer Datenaustaucheinrichtung 6 an eine Berechnungseinrichtung 7 weitergeleitet. Die Berechnungseinrichtung 7 bestimmt in Abhängigkeit der ihr zugeführten Eingangssignale Stellsignale für nachgeordnete Stellelemente. Diese Stellsignale sind beispielsweise Signale, die auf die Antriebseinrichtungen 9 des Fahrzeugs wirken sowie auf die Verzögerungseinrichtungen 10 des Fahrzeugs wirken, um eine Beschleunigung bzw. Verzögerung des eigenen Fahrzeugs durchführen zu können. So wird beispielsweise ein Stellsignal an ein leistungsbestimmendes Stellelement 9 der Antriebseinrichtung des Fahrzeugs ausgegeben, das beispielsweise als elektrisch ansteuerbare Drosselklappe, als Regelstange einer Dieseleinspritzpumpe oder als Kraftstoffmengenzumesseinrichtung eines Kraftstoffeinspritzsystems ausgeführt sein kann. Weiterhin wird ein Stellsignal ausgegeben, das an die Verzögerungseinrichtungen des Fahrzeugs ausgegeben wird, woraufhin die Steuerung der Verzögerungseinrichtungen 10 des Fahrzeugs hieraus einen Bremsdruck oder eine Bremskraft erzeugen, die an den Fahrzeugbremsen angreift und eine, entsprechend dem Verzögerungssignal vorgegebene Verzögerung erwirken. Die von der Berechnungseinrichtung 7 ermittelten Stellsignale werden mittels der Datenaustauscheinrichtung 6 an eine Ausgangsschaltung 8 weitergeleitet, die die Stellsignale an die nachgeordneten Stellelemente 9, 10 ausgibt. Aus den Abstands- und Relativgeschwindigkeitsdaten der Objektsensorik 3 ermittelt die Berechnungseinrichtung 7 die Relevanz der erkannten Objekte und wählt aus den Objekten ein Zielobjekt aus, bezüglich dem die Stelleinrichtungen 9, 10 angesteuert werden können, so dass eine Abstandsregelung durchführbar ist. In der Berechnungseinrichtung 7 wird ein Dynamikmodell benutzt, das aus den objektspezifischen Daten einen zukünftigen Kursbereich berechnet. Wird für den zukünftigen Kursbereich die Position, die Geschwindigkeit des Objektes sowie die Beschleunigung des Objektes verwendet, um die zukünftige Position sowie die Geschwindigkeit des Fahrzeugs vorauszusagen, so ist es nachteilig, dass bereits geringe Störungen oder Rauschen in den Messwerten zu einen Fehler in der Kursvorhersage führen können, da beispielsweise die Quergeschwindigkeit des Objektes bezüglich der verlängerten Fahrzeuglängsachse hinsichtlich derartiger Störungen sehr empfindlich ist. Daher wird in der Berechnungseinrichtung 7 ein Dynamikmodell für die Objekte benutzt, das sich dadurch auszeichnet, dass es eine niedrige Ordnung aufweist, also ein mathematisches Modell benutzt, das keine Terme höherer Ordnung wie beispielsweise quadratische Terme verwendet. Dies bedeutet, dass die Beschleunigung des Fahrzeugs hierfür nicht berücksichtigt wird, ebenso kann auf die Geschwindigkeit des Objektes verzichtet werden, so dass nur aus dem Objektaufenthaltsort die zukünftige Position bestimmt wird. Da die Objektdaten nicht als Absolutdaten sondern als Relativdaten bezüglich des eigenen Fahrzeugs ausgewertet werden, sind die Positionsänderungen sowie die Längs- und Quergeschwindigkeiten des Objekts relativ niedrig, so dass man mit einem Dynamikmodell niedriger Ordnung sehr gute Werte erhält.

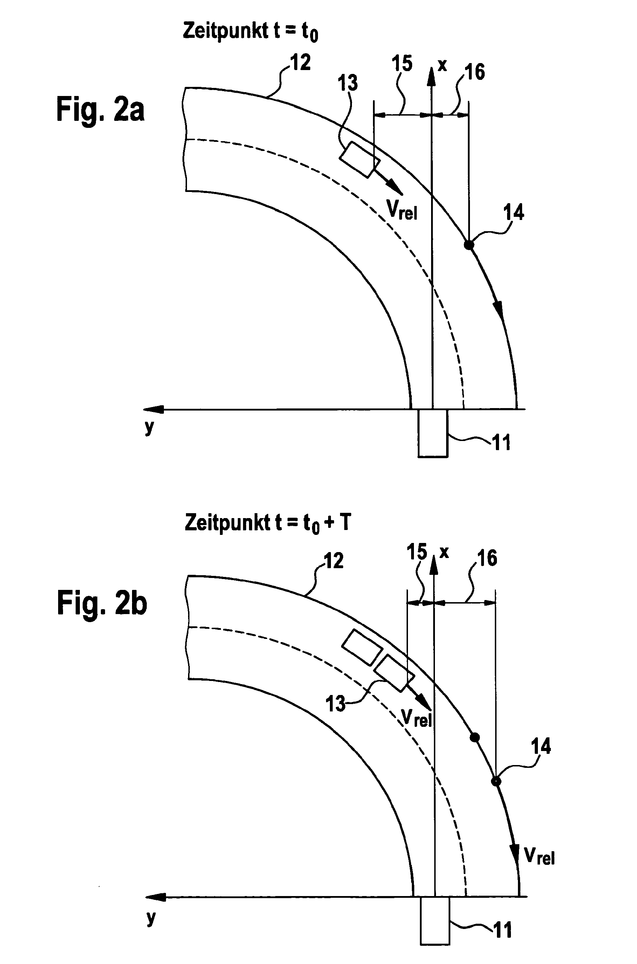

In Figur 2a ist eine beispielhafte Verkehrssituation dargestellt, bei der sich das eigene Fahrzeug 11, das mit einer Objektsensorik 3 und einem adaptiven Abstands- und Geschwindigkeitsregler 1 ausgestattet ist, auf einer mehrspurigen Straße 12 bewegt. Auf dieser mehrspurigen Straße 12 ist weiterhin ein vorherfahrendes Fahrzeug 13 vorhanden, dass sich, absolut gesehen, in der gleichen Richtung bewegt, jedoch eine Relativgeschwindigkeit vᵣₑₗ aufweist, die negativ ist, also dass sich das Fahrzeug 13 bezüglich des Fahrzeugs 11 annähert. Weiterhin ist ein beispielhaftes Standziel 14 am Fahrbahnrand erkannt worden, das sich ebenfalls mit einer Relativgeschwindigkeit vᵣₑₗ bezüglich des eigenen Fahrzeugs 11 annähert. Im Objektdetektionssystem 3 ist weiterhin ein Koordinatensystem beschrieben, das in Richtung der Fahrzeuglängsachse mit der x-Achse ausgerichtet ist und hierzu senkrecht also in Fahrzeugquerrichtung eine y-Achse aufweist. Die erkannten Objekte 13, 14 weisen bezüglich der verlängerten Fahrzeuglängsachse (x-Achse des Koordinatensystems) sogenannte Querversätze dy auf, die im Beispiel des vorherfahrenden Fahrzeugs 13 durch den Querversatz 15 und bezüglich des Standziels 14 durch den Querversatz 16 beschrieben werden. Diese Situation wird in Figur 2b zu einem späteren Zeitpunkt t = t₀ + T betrachtet, zu der sich die Fahrbahn 12 nicht verändert hat, da die Kurvendurchfahrt noch andauert. Lediglich die erkannten Objekte, so beispielsweise das vorherfahrende Fahrzeug 13 haben sich infolge der Relativgeschwindigkeit vᵣₑₗ weiter auf das eigene Fahrzeug 11 zubewegt sowie das Standziel 14 weiter bezüglich des eigenen Fahrzeugs 11 zubewegt. Hierdurch haben sich auch die Querversätze dy geändert, so dass zum Zeitpunkt t = t₀ + T die Querversätze dy* gemessen werden, wodurch der Querversatz 15 des vorherfahrenden Fahrzeugs betragsmäßig geringer wurde und der Querversatz 16 des Standziels betragsmäßig vergrößert wurde. Durch die Verarbeitung der Objektgrößen relativ zum eigenen Fahrzeug weist das vorherfahrende Fahrzeug 13 eine niedrige Relativgeschwindigkeit auf, so dass auch die Querversatzgeschwindigkeit dy/dt klein ist, wodurch diese Größe bezüglich Störeinflüssen sehr robust ist. Daher ist es möglich, die Kursprädiktion des vorherfahrenden Fahrzeugs 13 sowie des Standziels 14 nur mittels der gemessenen Position, also dem Abstand d sowie der Querversatzgeschwindigkeit dy/dt bzw. dy*/dt zu ermitteln, ohne große Abweichungen erwarten zu müssen. Aus der Querversatzgeschwindigkeit dy/dt bzw. dy*/dt kann weiterhin ein Spurwechsel des jeweiligen, bewegten Objektes erkannt werden.

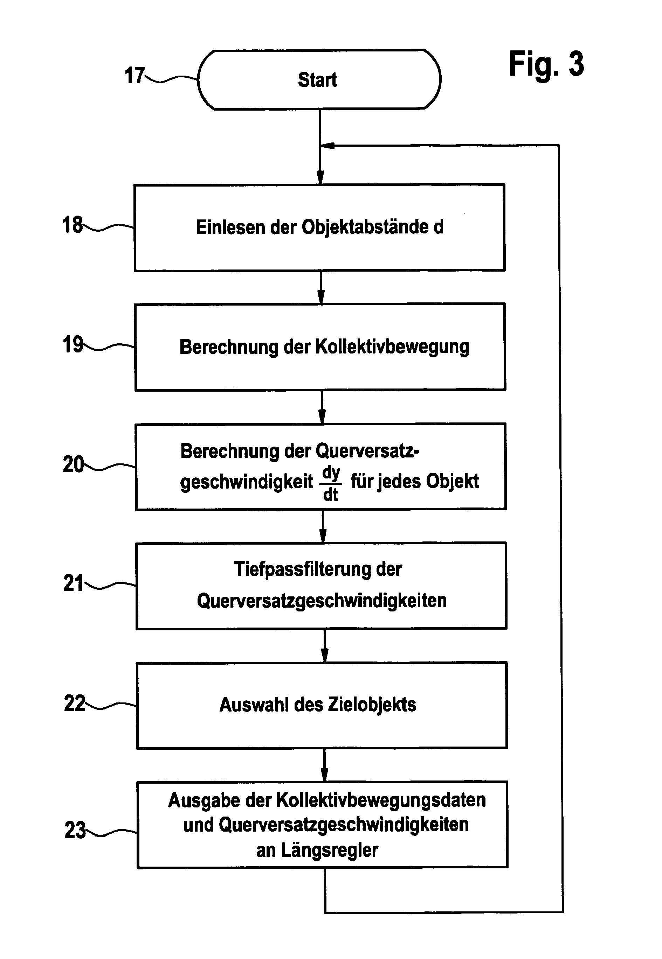

In Figur 3 ist ein beispielhaftes Ablaufdiagramm des erfindungsgemäßen Verfahrens gezeigt, das in Schritt 17 startet. Dieser Start kann beispielsweise erfolgen, wenn der adaptive Abstands- und Geschwindigkeitsregler 1 in Betrieb genommen wird oder wenn die Objektsensorik 3 ein vorausbefindliches Objekt im Sensorerfassungsbereich detektiert. Im darauffolgenden Schritt 18 werden die Objektabstände d und eventuell die zugehörigen Azimutwinkel, die die Objektsensorik 3 ermittelt, in die Berechnungseinrichtung 7 übernommen und weiterverarbeitet. Im darauffolgenden Schritt 19 wird aus den ermittelten Objektabständen daten die Kollektivbewegung aller erkannter Objekte ermittelt , indem beispielsweise ein gemeinsamer Bewegungsvektor V_{ges} ermittelt wird, der die gemeinsame Bewegung des Objektensembles sowie des eigenen Fahrzeugs 11 beschreibt. Im darauffolgenden Schritt 20 wird für jedes erkannte Objekt die Querversatzgeschwindigkeit dy/dt bzw. dy*/dt ermittelt, die die leterale Bewegung des einzelnen Objektes bezüglich des Objektensembles beschreibt. Bei der Berechnung der Kollektivbewegung und der Querversatzgeschwindigkeiten in den Schritten 19 und 20 kann beispielsweise auch die Kurvenkrümmung der momentan durchfahrenen Fahrbahnkurve berücksichtigt werden, indem beispielsweise ein Lenkwinkelsignal oder ein Gierratensignal mitberücksichtigt wird, und eine Kurvendurchfahrt, die aus der Kollektivbewegung ableitbar ist, plausibilisiert wird. Im darauffolgenden, optionalen Schritt 21 wird eine Tiefpassfilterung der Querversatzgeschwindigkeiten dy/dt durchgeführt, die vergleichsweise niedrige Beträge annehmen, wodurch die Tiefpassfilterung nur zu einem geringen Fehler führt. Daher ist es auch möglich, diese Tiefpassfilterung eventuell wegzulassen. Im nächsten Schritt 22 wird aus den Objekten ein geeignetes Zielobjekt ausgewählt, in dessen Abhängigkeit die Stellsignale erzeugt werden, da auf dieses Zielobjekt eine Geschwindigkeitsregelung im Sinne einer Abstandskonstantregelung durchgeführt wird. Im folgenden Schritt 23 werden die Kollektivbewegungsdaten sowie die Zielobjektwerte an die Längsregelung weitergegeben, die hieraus die Stellsignale für die Antriebseinrichtungen und die Verzögerungseinrichtungen generiert und an diese ausgibt.

## Patentansprüche

1. Verfahren zur Kursprädiktion von bewegten Objekten, bezüglich eines mit einer Objekterkennungssensorik und einem adaptiven Abstands- und Geschwindigkeitsregler (1) ausgestatteten Fahrzeug, bei dem die zukünftigen Bewegungen der Objekte (13, 14) vorausberechnet werden, **dadurch gekennzeichnet, dass** mittels der Objektsensorik lediglich die momentanen Positionen der Objekte ermittelt werden und dass mit einem Dynamikmodell niederer Ordnung, bei dem eine zukünftige Objektposition lediglich aus der momentanen Objektposition und der Querversatzgeschwindigkeit des Objekts berechnet wird, unter der Annahme, dass alle erkannten Objekte im wesentlichen den gleichen Kurs haben, in Abhängigkeit der momentanen Objektposition die zukünftigen Objektkurse prädiziert werden.

2. Verfahren nach Anspruch 1, **dadurch gekennzeichnet, dass** die Objektsensorik mindestens den Abstand (d) der erkannten, bewegten Objekte mittels Mikrowellenstrahlung, Laserstrahlung, Ultraschall oder einer Kombination hieraus misst.

3. Verfahren nach Anspruch 1 oder 2, **dadurch gekennzeichnet, dass** das Dynamikmodell niederer Ordnung eine zukünftige Objektposition aus der momentanen Objektposition und der Querversatzgeschwindigkeit des Objekts berechnet, insbesondere nach der Gleichung yₖ = yₖ₋₁ + yₖ₋₁(v_{dyi}), wobei y(k-1) die momentane Objektposition, y(k) eine zukünftige Objektposition unter Berücksichtigung der Kollektivgeschwindigkeit und yk-1(V_{dyi}) eine zukünftige Objektpositionskorrektur infolge der Querversatzgeschwindigkeit des Objekts repräsentiert

4. Verfahren nach einem der vorhergehenden Ansprüche, **dadurch gekennzeichnet, dass** für alle Objekte ein gemeinsamer Bewegungsvektor (19), der die Kollektivgeschwindigkeit beschreibt, ermittelt wird.

5. Verfahren nach einem der vorhergehenden Ansprüche, **dadurch gekennzeichnet, dass** zur Kursprädiktion zusätzlich ein Gierratensignal des eigenen Fahrzeugs herangezogen wird.

6. Verfahren nach einem der vorhergehenden Ansprüche, **dadurch gekennzeichnet, dass** zur Kursprädiktion zusätzlich stehende Ziele am Fahrbahnrand detektiert und ausgewertet werden, indem der vorausberechnete Kurs entlang der stehenden Ziele prädiziert wird.

7. Verfahren nach einem der vorhergehenden Ansprüche, **dadurch gekennzeichnet, dass** für jedes Objekt eine Querversatzgeschwindigkeit (20) ermittelt wird, die als konstant angenommen wird.

8. Verfahren nach Anspruch 7, **dadurch gekennzeichnet, dass** die Querversatzgeschwindigkeit tiefpassgefiltert und/oder kalmangefiltert (21) werden.

9. Verfahren nach Anspruch 7 oder 8, **dadurch gekennzeichnet, dass** aus der Querversatzgeschwindigkeit eines bewegten, erkannten Objektes ein Spurwechsel ableitbar ist.

10. Vorrichtung zur Kursprädiktion von bewegten Objekten, bezüglich eines mit einer Objefcterkennungssensorik und einem adaptiven Abstands- und Geschwindigkeitsregler (1) ausgestatteten Fahrzeug, bei dem die zukünftigen Bewegungen der Objekte (13, 14) vorausberechnet werden, **dadurch gekennzeichnet, dass** dem adaptiven Abstands- und Geschwindigkeitsregler von der Objektsensorik lediglich die momentanen Positionen der Objekte zugeführt werden und dass in dem adaptiven Abstands- und Geschwindigkeitsregler ein Dynamikmodell niederer Ordnung vorgesehen ist, bei dem eine zukünftige Objektposition lediglich aus der momentanen Objektposition und der Querversatzgeschwindigkeit des Objekts berechnet wird, das unter der Annahme, dass alle erkannten Objekte im wesentlichen den gleichen Kurs haben in Abhängigkeit der zugeführten, momentanen Objektposition die zukünftigen Objektkurse prädiziert werden.

## Claims

1. Method for predicting the course of moving objects with reference to a vehicle equipped with an object detection sensor system and an adaptive distance and speed control (1), in the case of which the future movements of the objects (13, 14) are calculated in advance, **characterized in that** the object sensor system is used to determine only the instantaneous positions of the objects, and **in that** a low-order dynamic model in the case of which a future object position is calculated only from the instantaneous object position and the lateral offset speed of the object, is used to predict the future course of the object as a function of the instantaneous object position under the assumption that all detected objects have substantially the same course.

2. Method according to Claim 1, **characterized in that** the object sensor system measures at least the distance (d) of the detected, moving objects by means of microwave radiation, laser radiation, ultrasound or a combination thereof.

3. Method according to Claim 1 or 2, **characterized in that** the dynamic model of lower order calculates a future object position from the instantaneous object position and the lateral offset speed of the object, in particular using the equation Yₖ = Yₖ₋₁ + Yₖ₋₁ (V_{dyi}), y(k-1) representing the instantaneous object position, y(k) a future object position taking account of the collective speed, and yₖ-₁(v_{dyi}) a future object position correction as a consequence of the lateral offset speed of the object.

4. Method according to one of the preceding claims, **characterized in that** a common movement vector (19) which describes the collective speed is determined for all the objects.

5. Method according to one of the preceding claims, **characterized in that** use is made in addition of a yaw rate signal of the driver's own vehicle for the purpose of course prediction.

6. Method according to one of the preceding claims, **characterized in that** for the purpose of course prediction stationary targets at the edge of the carriageway are additionally detected and evaluated by predicting the course along the stationary targets as calculated in advance.

7. Method according to one of the preceding claims, **characterized in that** a lateral offset speed (20) which is assumed to be constant is determined for each object.

8. Method according to Claim 7, **characterized in that** the lateral offset speeds are low-pass filtered and/or Kalman filtered (21).

9. Method according to Claim 7 or 8, **characterized in that** a lane change can be derived from the lateral offset speed of a moving, detected object.

10. Apparatus for predicting the course of moving objects, with reference to a vehicle equipped with an object detection sensor system and an adaptive distance and speed control (1), in the case of which the future movements of the objects (13, 14) are calculated in advance, **characterized in that** only the instantaneous positions of the objects are fed to the adaptive distance and speed control of the object sensor system, and **in that** there is provided in the adaptive distance and speed control a low-order dynamic model in the case of which a future object position is calculated only from the instantaneous object position and the lateral offset speed of the object, and which is used to predict the future course of the object as a function of the instantaneous object position fed under the assumption that all detected objects have substantially the same course.

## Revendications

1. Procédé de prédiction de la trajectoire d'objets en mouvement par rapport à un véhicule équipé d'un ensemble de détecteurs de détection d'objets et d'un régulateur adaptatif de distance et de vitesse (1),
les déplacements futurs des objets (13, 14) étant calculés à l'avance,
**caractérisé en ce que**
seules les positions instantanées des objets sont saisies au moyen de l'ensemble de détecteurs d'objets et
**en ce que** la trajectoire future des objets est prédite en fonction de la position instantanée des objets, à l'aide un modèle dynamique d'ordre inférieur par lequel une position future d'un objet est calculée uniquement à partir de la position instantanée de l'objet et de la vitesse de décalage transversal de l'objet avec l'hypothèse que tous les objets détectés ont essentiellement la même trajectoire.

2. Procédé selon la revendication 1, **caractérisé en ce que** l'ensemble de détecteurs d'objets mesure au moins la distance (d) entre l'objet détecté en mouvement, au moyen d'un rayonnement de microondes, d'un rayonnement laser, d'ultrasons ou de leurs combinaisons.

3. Procédé selon les revendications 1 ou 2,
**caractérisé en ce que** le modèle dynamique d'ordre inférieur calcule la position future d'un objet à partir de la position instantanée de l'objet et de la vitesse de décalage transversal de l'objet, en particulier selon l'équation Yₖ = yₖ-₁ (v_{dyi}) , dans laquelle _{Y}(ₖ₋₁) représente la position instantanée de l'objet, yₖ la position future de l'objet en tenant compte de la vitesse collective et yₖ₋₁(v_{dyi}) une correction de la position future de l'objet suite à la vitesse de décalage transversal de l'objet.

4. Procédé selon l'une des revendications précédentes, **caractérisé en ce qu'**un vecteur commun de déplacement (19) qui décrit la vitesse collective est déterminé pour tous les objets.

5. Procédé selon l'une des revendications précédentes, **caractérisé en ce que** pour la prédiction de trajectoire, il utilise en supplément un signal de vitesse de lacet du véhicule propre.

6. Procédé selon l'une des revendications précédentes, **caractérisé en ce que** pour la prédiction de trajectoire, des cibles présentes sur le bord de la bande de circulation sont détectés et évalués en supplément en prédisant la trajectoire préalablement calculée le long des cibles fixes.

7. Procédé selon l'une des revendications précédentes, **caractérisé en ce qu'**une vitesse de décalage transversal (20) est déterminée et est supposée constante pour chaque objet.

8. Procédé selon la revendication 7, **caractérisé en ce que** la vitesse de décalage transversal subit un filtrage passe-bas et/ou un filtrage de Kalman (21).

9. Procédé selon les revendications 7 ou 8,
**caractérisé en ce qu'**un changement de bande de circulation peut être déduit de la vitesse de décalage transversal d'un objet mobile détecté.

10. Dispositif de prédiction de la trajectoire d'objets en mouvement par rapport à un véhicule doté d'un ensemble de détecteurs de détection d'objets et d'un régulateur adaptatif de distance et de vitesse (1), dans lequel les déplacements futurs des objets (13, 14) sont calculés préalablement,
**caractérisé en ce que**
seules les positions instantanées des objets sont amenées par l'ensemble de détecteurs d'objets au régulateur adaptatif de distance et de vitesse et
**en ce que** le régulateur adaptatif de distance et de vitesse présente un modèle dynamique d'ordre inférieur par lequel la position future d'un objet est calculée uniquement à partir de la position instantanée de l'objet et de la vitesse de décalage transversal de l'objet, et par lequel, avec l'hypothèse que tous les objets détectés ont essentiellement la même trajectoire, la course future des objets est prédite en fonction des positions d'objets instantanées apportées.
